# EUROPÄISCHE PATENTSCHRIFT

(11) **EP 3 033 246 B1**
(45) Veröffentlichungstag und Bekanntmachung des Hinweises auf die Patenterteilung: **24.02.2021**
(21) Anmeldenummer: 14750234.8
(22) Anmeldetag: 12.08.2014
(51) Int. Cl.: B60N 2/015, B60N 2/36, E05B 77/38, E05B 85/26

(54) **VERRIEGELUNGSEINHEIT FÜR EINEN FAHRZEUGSITZ UND FAHRZEUGSITZ**
LOCKING UNIT FOR A VEHICLE SEAT AND VEHICLE SEAT
UNITÉ DE VERROUILLAGE POUR SIÈGE DE VÉHICULE ET SIÈGE DE VÉHICULE

(30) Priorität: 14.08.2013 DE 102013216054
(43) Veröffentlichungstag der Anmeldung: 22.06.2016
(73) Patentinhaber: Adient Luxembourg Holding S.à r.l., 1855 Luxembourg (LU)
(72) Erfinder: HANDL, Patrick, 50739 Köln (DE); VEDDER, Andreas, 42781 Haan (DE); MOELLER, Uwe, 42697 Solingen (DE); GORDEENKO, Igor, 50226 Frechen (DE)
(74) Vertreter: Liedhegener, Ralf
(86) Internationale Anmeldenummer: PCT/EP2014/067222
(87) Internationale Veröffentlichungsnummer: WO 2015/022312

(56) Entgegenhaltungen:
- EP-A2- 0 198 211
- JP-A- 2010 285 127
- US-A1- 2012 193 966

## Beschreibung

Die Erfindung betrifft eine Verriegelungseinheit für einen Fahrzeugsitz mit den Merkmalen des Anspruchs 1. Die Erfindung betrifft auch einen Fahrzeugsitz mit den Merkmalen des Anspruchs 15.

### Stand der Technik

Aus der DE 10 2008 033 304 A1 ist ein Fahrzeugsitz mit einer Verriegelungseinheit bekannt. Die Verriegelungseinheit ist dabei an einem Strukturteil, insbesondere einer Rückenlehne des Fahrzeugsitzes befestigt und dient zur Verriegelung der Rückenlehne mit einer Struktur des Fahrzeugs, beziehungsweise dessen Karosserie. Dazu weist die Verriegelungseinheit eine als Klinke bezeichnete Drehfalle auf, welche im verriegelten Zustand der Verriegelungseinheit einen an der Struktur des Fahrzeugs befestigten Verriegelungsbolzen umgreift.

Aus der DE 103 04 574 B4 ist eine Verriegelungseinheit für einen Fahrzeugsitz bekannt. Eine derartige Verriegelungseinheit umfasst eine schwenkbar gelagerte Drehfalle zum Verriegeln mit einem Verriegelungsbolzen. Eine um eine andere Schwenkachse schwenkbar gelagerte Rastklinke sichert die Drehfalle im verriegelten Zustand. Ein Spannelement übt auf die Drehfalle ein schließendes Moment aus und eliminiert auf diese Art zwischen der Drehfalle und dem Verriegelungsbolzen vorhandenes Spiel.

Die DE 101 26 687 A1 offenbart eine Verriegelungseinheit mit einem eine Aufnahmeöffnung eines Schlossgehäuses begrenzenden Anschlagelement und einer Drehfalle von weitgehend konstanter Dicke. In einem verriegelten Zustand der Verriegelungseinheit und einem exakt in Axialrichtung verlaufenden Verriegelungsbolzen ist ein erster Kontaktbereich zwischen dem Verriegelungsbolzen und dem Anschlagelement in axialer Richtung neben einem zweiten Kontaktbereich zwischen dem Verriegelungsbolzen und der Drehfalle angeordnet. Die Drehfalle, insbesondere ein Finger und ein Teil eines Grundkörpers der Drehfalle, kann an dem Anschlagelement vorbeischwenken.

Aus der EP 1 606 484 B1 ist eine Verriegelungseinheit für eine Motorhaube eines Kraftfahrzeugs mit einer Drehfalle und einem Anschlagelement an einer Seitenplatte eines Schlossgehäuses bekannt. Das Anschlagelement steht nach außen von dem Schlossgehäuse ab.

Aus der EP 0 198 211 A2 ist eine Verriegelungsvorrichtung für verschwenkbare Hintersitz-Rückenlehnen von Kraftfahrzeugen bekannt, welche ein Schlossgehäuse zur Aufnahme eines zu lagernden Bolzens bzw. eines Verriegelungselements besitzt.

Ferner sind ein beweglich am Schlossgehäuse gelagertes, gegen einen Federwiderstand in Richtung einer Lösungsstellung betätigbares Sperrelement und ein am Sperrelement angreifendes Betätigungselement vorgesehen. Das Schlossgehäuse und das Sperrelement sind einteilig aus Kunststoff gefertigt, wobei das Sperrelement durch einen elastischen Steg an dem Schlossgehäuse angeformt ist.

Eine weitere Ausgestaltung einer Verriegelungseinheit mit einem Gehäuse und einer drehbar gelagerten Anordnung, umfassend einen Haken und eine Klaue, ist beispielsweise aus der JP 2010 285 127 A bekannt. Eine alternative Verriegelungseinheit mit einer drehbar gelagerten Drehfalle ist beispielsweise aus der US 2012/193966 A1 bekannt.

Derartige Verriegelungseinheiten dienen beispielsweise zur Verriegelung einer Rückenlehne eines Fahrzeugsitzes an einem Sitzteil und/oder an einer Karosserie oder Struktur eines Fahrzeugs oder zur Verriegelung des Fahrzeugsitzes an der Karosserie oder Struktur des Fahrzeugs. Auch Motorhauben, Heckklappen oder Türen von Fahrzeugen lassen sich mit solchen Verriegelungseinheiten mit der Karosserie oder Struktur des Fahrzeugs verriegeln.

Die Verriegelungseinheit weist ein Gehäuse auf, welches zwei Seitenplatten umfasst. Im verriegelten Zustand liegt der Verriegelungsbolzen in einer Aufnahmeöffnung des Gehäuses und in einem Hakenmaul der Drehfalle an. Die Drehfalle ist ein weitgehend flach geformtes Bauteil, das eine Materialstärke von nur wenigen Millimetern aufweist.

Durch Toleranzen im Fahrzeug oder im Fahrzeugsitz kann es zu einer Schiefstellung des Verriegelungsbolzens relativ zur Drehfalle kommen, so dass der Verriegelungsbolzen nicht mehr parallel zu der Drehachse der Drehfalle ausgerichtet ist, sondern geneigt. Dies kann zu Geräuschproblemen führen, wenn beispielsweise die Drehfalle in ihrer Lagerstelle durch den schrägstehenden Verriegelungsbolzen etwas gekippt wird und dadurch in Kontakt mit dem Gehäuse kommt. Zudem erhöht die Schiefstellung der Drehfalle den Spannabstand des Verriegelungsbolzens. Der Spannabstand ist das kleinste Maß zwischen der Anlagefläche des Verriegelungsbolzens an der Aufnahmeöffnung des Gehäuses einerseits und der gegenüberliegenden Anlagefläche des Verriegelungsbolzens an dem Hakenmaul der Drehfalle andererseits. Im toleranzfreien Fall ist bei einem kreisrunden Bolzenquerschnitt und genau um 180° über den Bolzenumfang verteilt angeordneten Anlageflächen zwischen einerseits dem Verriegelungsbolzen und der Aufnahmeöffnung des Gehäuses und andererseits dem Verriegelungsbolzen und dem Hakenmaul der Drehfalle der Spannabstand gleich dem Bolzendurchmesser.

Eine Erhöhung des Spannabstands führt dazu, dass eine in der Verriegelungseinheit vorgesehene Spielfreistellung nur eingeschränkt wirksam ist, da die Drehfalle nicht weit genug in Richtung ihrer verriegelnden Position drehen kann. Bei einer starken Erhöhung des Spannabstands kann die Rastklinke nicht oder nicht vollständig einfallen. Dann ist die Drehfalle im verriegelten Zustand nicht gesichert. Des Weiteren hat die Schiefstellung des Verriegelungsbolzens einen Überdeckungsverlust zwischen Drehfalle und Rastklinke zur Folge, was die Festigkeit der Verriegelungseinheit reduzieren kann.

### Aufgabe

Der Erfindung liegt die Aufgabe zu Grunde, eine Verriegelungseinheit der eingangs genannten Art zu verbessern, insbesondere bei Verwendung der Verriegelungseinheit in einem Fahrzeugsitz diese unempfindlicher gegen Winkel- und/oder Lagetoleranzen zwischen der Drehfalle und dem Verriegelungsbolzen zu machen.

### Lösung

Diese Aufgabe wird erfindungsgemäß durch eine Verriegelungseinheit für einen Fahrzeugsitz gelöst, umfassend ein Schlossgehäuse mit einer Aufnahmeöffnung zur Aufnahme eines Verriegelungsbolzens, sowie eine schwenkbar um einen ersten Lagerbolzen gelagerte Drehfalle, welche ein Hakenmaul zum Verriegeln mit dem Verriegelungsbolzen aufweist, wobei der erste Lagerbolzen in einer Axialrichtung ausgerichtet ist, und die Aufnahmeöffnung durch ein Anschlagelement begrenzt ist, das Anschlagelement einen Anschlag für den in dem Hakenmaul befindlichen Verriegelungsbolzen darstellt, und das Anschlagelement in Axialrichtung in das Schlossgehäuse hinein ragt. In einem verriegelten Zustand der Verriegelungseinheit, überlappen sich bei exakt in Axialrichtung verlaufendem Verriegelungsbolzen, ein erster Kontaktbereich zwischen dem Verriegelungsbolzen und dem Anschlagelement und ein zweiter Kontaktbereich zwischen dem Verriegelungsbolzen und der Drehfalle in Axialrichtung teilweise oder der erste Kontaktbereich liegt in Axialrichtung vollständig innerhalb des zweiten Kontaktbereichs.

Der erste Kontaktbereich ist die Summe der Kontaktflächen zwischen dem Verriegelungsbolzen und dem Anschlagelement, wobei die Kontaktflächen auch punktförmig oder linienförmig sein können und dadurch einen sehr geringen Flächeninhalt aufweisen können. Der erste Kontaktbereich kann aus genau einer Kontaktfläche oder aus mehreren Kontaktflächen bestehen. Einzelne Kontaktflächen des ersten Kontaktbereichs können versetzt zueinander angeordnet sein, ohne sich zu berühren. Der zweite Kontaktbereich ist die Summe der Kontaktflächen zwischen dem Verriegelungsbolzen und der Drehfalle, wobei die Kontaktflächen auch punktförmig oder linienförmig sein können und dadurch einen sehr geringen Flächeninhalt aufweisen können. Der zweite Kontaktbereich kann aus genau einer Kontaktfläche oder aus mehreren Kontaktflächen bestehen. Einzelne Kontaktflächen des zweiten Kontaktbereichs können versetzt zueinander angeordnet sein, ohne sich zu berühren.

Ein Überlappen des ersten Kontaktbereichs mit dem zweiten Kontaktbereich in Axialrichtung bedeutet, dass in einem in Axialrichtung ausgerichteten Zylinderkoordinatensystem Teilbereiche des ersten Kontaktbereichs und Teilbereiche des zweiten Kontaktbereichs dieselben axialen Koordinaten haben, ohne sich dabei berühren zu müssen. Dass der erste Kontaktbereich in Axialrichtung vollständig innerhalb des zweiten Kontaktbereichs liegt, bedeutet, dass in einem in Axialrichtung ausgerichteten Zylinderkoordinatensystem der erste Kontaktbereich ausschließlich axiale Koordinaten hat, die auch der zweite Kontaktbereich aufweist.

Vorteilhafte Ausgestaltungen, welche einzeln oder in Kombination miteinander eingesetzt werden können, sind Gegenstand der Unteransprüche.

Erfindungsgemäß ist die Aufnahmeöffnung durch ein Anschlagelement begrenzt, welches einen Anschlag für einen in dem Hakenmaul befindlichen Verriegelungsbolzen darstellt, und welches in Axialrichtung in das Schlossgehäuse hinein ragt.

Dadurch ist der Abstand zwischen dem ersten Kontaktbereich und dem zweiten Kontaktbereich in Axialrichtung vermindert. Dadurch ist auch der Spannabstand bei einem schräg stehenden Verriegelungsbolzen vermindert und damit ist die Verriegelungseinheit weniger empfindlich gegen Winkel- und/oder Lagetoleranzen zwischen der Drehfalle und dem Verriegelungsbolzen.

Vorzugsweise umfasst das Schlossgehäuse mindestens eine erste Seitenplatte, in welcher die Aufnahmeöffnung ausgebildet ist. Vorteilhaft ist noch eine zweite Seitenplatte vorgesehen, welche annähernd parallel zu der ersten Seitenplatte angeordnet ist, wobei in beiden Seitenplatten gemeinsam die Aufnahmeöffnung ausgebildet ist.

Dabei ragt das Anschlagelement vorteilhaft von der ersten Seitenplatte in Axialrichtung in das Schlossgehäuse hinein.

Gemäß einer vorteilhaften Ausgestaltung der Erfindung ist das Anschlagelement durch eine Umbiegung einer an der ersten Seitenplatte vorgesehenen Lasche gebildet. Auf diese Art ist die Herstellung des Anschlagelements sowie der Verriegelungseinheit verhältnismäßig einfach.

Vorteilhaft ist die Lasche dabei um einen Biegewinkel von etwa 75° bis 85° umgebogen. Besonders vorteilhaft ist die Lasche um einen Biegewinkel von etwa 80° umgebogen. Dadurch ist der erste Kontaktbereich des Verrieglungsbolzens mit dem Anschlagelement in Axialrichtung stark verkleinert und als annähernd punktförmig anzusehen. Auf diese Art bleibt der Abstand zwischen dem ersten Kontaktbereichs und dem zweiten Kontaktbereich in Axialrichtung stets minimal. Ein Biegewinkel von 90° bietet eine maximale Kontaktfläche des ersten Kontaktbereichs und reduziert damit die Flächenpressung.

Besonders vorteilhaft liegt der erste Kontaktbereich des Verriegelungsbolzens mit dem Anschlagelement dem zweiten Kontaktbereich des Verriegelungsbolzens mit der Drehfalle diametral bezüglich des Verriegelungsbolzes gegenüber.

Vorzugsweise ist das Hakenmaul der Drehfalle von einer Nase und einem Finger begrenzt. Dabei dient die Nase der Drehfalle zum Festhalten des Verriegelungsbolzens im verriegelten Zustand der Verriegelungseinheit. Der Finger der Drehfalle dient zum Auswerfen des Verriegelungsbolzens beim Entriegeln. Ferner drückt der Verriegelungsbolzen beim Verriegeln auf den Finger und schwenkt dadurch die Drehfalle in ihre geschlossene Stellung.

Gemäß einer vorteilhaften Weiterbildung der Erfindung weist die Drehfalle einen Grundkörper mit annähernd konstanter Dicke auf, wobei die Dicke des Fingers aber geringer als die Dicke des Grundkörpers ist. Somit kann der Finger seitlich an dem Anschlagelement vorbei schwenken.

Der Grundkörper kann aus einem Blech ausgeformt, insbesondere ausgestanzt sein. Die reduzierte Dicke des Fingers kann in einem Herstellverfahrensschritt durch einen Umformvorgang des Blechs im Bereich des Fingers erzeugt sein.Der Finger kann dabei einstückig mit dem Grundkörper der Drehfalle ausgebildet sein. Der Finger kann in Axialrichtung außermittig zu dem Grundkörper der Drehfalle angeordnet sein. Besonders bauraumsparend ist die Verriegelungseinheit aufgebaut, indem der Finger einseitig bündig mit dem Grundkörper abschließt.

Der Finger kann auch als separates Teil ausgebildet sein. Insbesondere kann der Finger ein angespritztes Kunststoffteil sein.

Vorteilhaft ist das Anschlagelement in Axialrichtung versetzt zu dem Finger angeordnet, so dass der Finger seitlich an dem Anschlagelement vorbei schwenken kann. Das Anschlagelement kann aufgrund des Fingers geringerer Dicke den Grundkörper der Drehfalle in Axialrichtung überlappen, ohne dass es zu Kollisionen zwischen dem Anschlagelement und der Drehfalle während einer funktionsbedingten Drehung der Drehfalle kommt.

Vorteilhaft weist die Nase an mindestens einer dem Hakenmaul zugewandten Kante eine Fase auf. Dadurch ist der zweite Kontaktbereich des Verrieglungsbolzens mit der Drehfalle in Axialrichtung verkleinert.

Vorzugsweise weist die Nase an jeder dem Hakenmaul zugewandten Kante je eine Fase auf. Vorzugsweise weisen beide Fasen einen gleichartigen Querschnitt auf.

Gemäß einer Weiterbildung der Erfindung gehen die beiden Fasen in Axialrichtung ineinander über. Dadurch ist der zweite Kontaktbereich in Axialrichtung stark verkleinert und als annähernd punktförmig anzusehen.

Gemäß einer vorteilhaften Ausgestaltung der Erfindung ist die dem Verriegelungsbolzen zugewandte Fläche der Nase konvex gekrümmt ausgebildet. Dadurch ist der zweite Kontaktbereich in Axialrichtung stark verkleinert und als annähernd punktförmig anzusehen. Ferner ist die Flächenpressung der Nase der Drehfalle auf den Verriegelungsbolzen verringert.

Diese Aufgabe wird auch durch einen Fahrzeugsitz mit den Merkmalen des Anspruches 15 gelöst, welcher mindestens eine erfindungsgemäße Verriegelungseinheit umfasst.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:

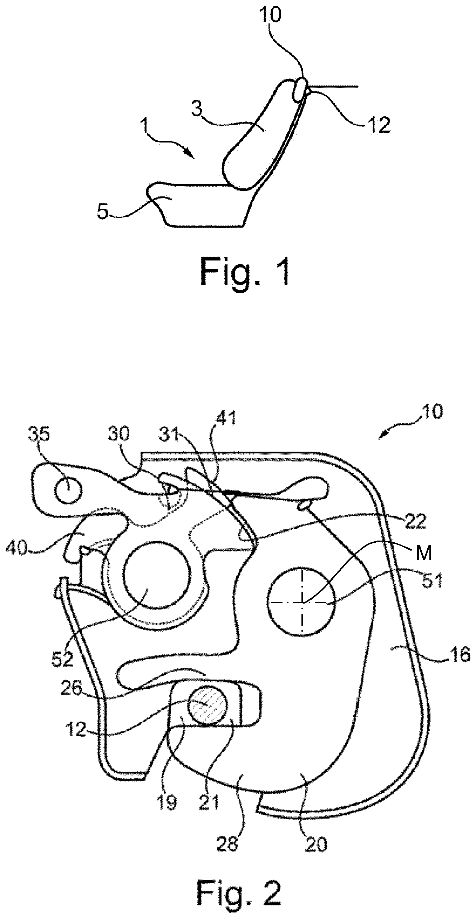

- Fig. 1:: eine schematisierte Darstellung eines Fahrzeugsitzes,
- Fig. 2:: einen Schnitt durch eine Verriegelungseinheit gemäß dem Stand der Technik,
- Fig. 3:: eine Seitenansicht einer Verriegelungseinheit gemäß dem Stand der Technik,
- Fig. 4:: einen Schnitt entlang der Linie A - A aus Fig. 3,
- Fig. 5:: eine Seitenansicht einer Verriegelungseinheit gemäß einem ersten Ausführungsbeispiel,
- Fig. 6:: einen Schnitt entlang der Linie B - B aus Fig. 5,
- Fig. 7:: eine Seitenansicht einer Verriegelungseinheit gemäß einem zweiten Ausführungsbeispiel,
- Fig. 8:: einen Schnitt entlang der Linie C - C aus Fig. 7,
- Fig. 9:: eine Seitenansicht einer Drehfalle gemäß dem Stand der Technik mit schräg stehendem Verriegelungsbolzen,
- Fig. 10:: eine Seitenansicht einer Drehfalle gemäß dem ersten Ausführungsbeispiel mit schräg stehendem Verriegelungsbolzen,
- Fig. 11:: eine Seitenansicht einer Drehfalle gemäß dem zweiten Ausführungsbeispiel mit schräg stehendem Verriegelungsbolzen und
- Fig. 12:: eine perspektivische Darstellung einer Drehfalle gemäß dem ersten sowie dem zweiten Ausführungsbeispiel.

In einem Kraftfahrzeug ist eine Verriegelungseinheit 10 zur Anbindung eines Strukturteils, vorliegend einer Rückenlehne 3, eines Fahrzeugsitzes 1, insbesondere eines Rücksitzes, an einer Fahrzeugstruktur vorgesehen. Die Rückenlehne 3 ist dabei von einer Gebrauchsstellung in eine Nichtgebrauchsstellung schwenkbar an einem Sitzteil 5 angebracht.

Die Verriegelungseinheit 10 ist auch an anderen Stellen einsetzbar, beispielsweise zur Befestigung des Sitzteils 5 des Fahrzeugsitzes 1 an der Bodenstruktur des Kraftfahrzeugs oder in einem Türschloss.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die Verriegelungseinheit 10 weist ein Schlossgehäuse auf, welches eine erste Seitenplatte 16 und eine nicht dargestellte zweite Seitenplatte umfasst. Die Grundflächen der ersten Seitenplatte 16 und der zweiten Seitenplatte sind vorliegend weitgehend flach ausgestaltet und in einer durch die Fahrtrichtung und die Vertikalrichtung definierten Ebene angeordnet, also senkrecht zur Querrichtung. Die erste Seitenplatte 16 und die zweiten Seitenplatte umfassen je zwei vorliegend kreisrund ausgeführte Lagerbohrungen.

In der ersten Seitenplatte 16 und in der zweiten Seitenplatte ist eine insbesondere schlitzförmige Aufnahmeöffnung 19 ausgebildet, welche sich in Richtung eines Verriegelungsbolzens 12 insbesondere trichterförmig öffnet, um diesen zum Verriegeln aufzunehmen. Dabei ist die Verriegelungseinheit 10 vorliegend an der Rückenlehne 3 und der Verriegelungsbolzen 12 an der Fahrzeugstruktur befestigt. Es ist auch denkbar, dass die Verriegelungseinheit 10 an der Fahrzeugstruktur und der Verriegelungsbolzen 12 an der Rückenlehne 3 befestigt ist.

Eine Drehfalle 20 ist auf einem ersten Lagerbolzen 51 schwenkbar gelagert, welcher wiederum an der ersten Seitenplatte 16 und an der zweiten Seitenplatte befestigt ist.

Der erste Lagerbolzen 51 ist in je eine Lagerbohrung der ersten Seitenplatte 16 und der zweiten Seitenplatte eingesetzt. Der erste Lagerbolzen 51 verläuft somit vorliegend horizontal in Querrichtung. Vorliegend ist der vorzugsweise metallische erste Lagerbolzen 51 mit der ersten Seitenplatte 16 und der zweiten Seitenplatte vernietet oder verstemmt. Der Lagerbolzen 51 ist weitgehend rotationssymmetrisch um eine Mittelachse M. Der Lagerbolzen ist in Richtung der Mittelachse M ausgerichtet. Eine durch die Mittelachse M des ersten Lagerbolzens 51 definierte Richtung wird im Folgenden als Axialrichtung bezeichnet. Somit ist der Lagerbolzen 51 in Axialrichtung ausgerichtet. Dabei umfasst der Begriff Axialrichtung alle Vektoren, die parallel zu der Mittelachse M verlaufen, unabhängig davon, ob diese mit der Mittelachse M fluchten.

Der von der Aufnahmeöffnung 19 aufzunehmende Abschnitt des Verriegelungsbolzens 12 verläuft bei optimaler Montage in Axialrichtung. In der Praxis verläuft der Verriegelungsbolzens 12 aufgrund von Toleranzen meist leicht geneigt zur Axialrichtung.

Die Drehfalle 20 weist ein Drehfallenloch 24 auf, welches vorliegend als kreisrunde Öffnung ausgebildet ist, und welches von dem ersten Lagerbolzen 51 durchdrungen ist. Mittels einer Feder ist die Drehfalle 20 in Öffnungsrichtung vorgespannt. Der Lagerbolzen 51 lagert die Drehfalle 20 schwenkbar.

Die Drehfalle 20 weist ferner zum Zusammenwirken mit dem Verriegelungsbolzen 12 ein Hakenmaul 21 auf. Auf der dem Drehfallenloch 24 entfernt gelegenen Seite ist das Hakenmaul 21 von einer Nase 28 der Drehfalle 20 seitlich begrenzt. Auf der dem Drehfallenloch 24 zugewandten Seite ist das Hakenmaul 21 von einem Finger 26 der Drehfalle 20 seitlich begrenzt. Der Finger 26 ist vorliegend einstückig mit dem Grundkörper der Drehfalle 20 ausgebildet. Der Finger 26 kann aber auch als separates Teil ausgebildet sein, insbesondere als an die Drehfalle 20 angespritztes Kunststoffteil.

Zum Zusammenwirken mit einer Rastklinke 30 und einem Spannelement 40 weist die Drehfalle 20 eine Funktionsfläche 22 auf. Im verriegelten Zustand weist die Funktionsfläche 22 näherungsweise in Richtung eines zweiten Lagerbolzens 52, welcher parallel zu dem ersten Lagerbolzen 51 angeordnet ist und die Rastklinke 30 und das Spannelement 40 schwenkbar lagert. Die Funktionsfläche 22 ist vorliegend eben ausgebildet, kann aber beispielsweise auch kreisbogenförmig gekrümmt und konvex oder konkav ausgebildet sein.

Auch der zweite Lagerbolzen 52 ist in je eine Lagerbohrung der ersten Seitenplatte 16 und der zweiten Seitenplatte eingesetzt. Der zweite Lagerbolzen 52 verläuft somit ebenfalls in Axialrichtung, welche vorliegend der Querrichtung entspricht. Vorliegend ist der vorzugsweise metallische zweite Lagerbolzen 52 mit der ersten Seitenplatte 16 und der zweiten Seitenplatte vernietet oder verstemmt.

Die Drehfalle 20 ist bei dem ersten sowie dem zweiten Ausführungsbeispiel gleichartig ausgeführt und weist einen Grundkörper auf, welcher in axialer Richtung größtenteils von je einer flachen Grundfläche begrenzt ist. Die Breite der Funktionsfläche 22 entspricht der Dicke des Grundkörpers der Drehfalle 20, also der Ausdehnung des Grundkörpers in axialer Richtung.

Die Dicke der Nase 28 entspricht ebenfalls weitgehend der Dicke des Grundkörpers der Drehfalle 20. An den dem Hakenmaul 21 zugewandten Kanten weist die Nase 28 jedoch beidseitig je eine Fase 29 auf.

Die Dicke des Fingers 26 ist jedoch geringer als die Dicke des Grundkörpers der Drehfalle 20. Vorliegend beträgt die Dicke des Fingers 26 etwa ein Drittel der Dicke des Grundkörpers der Drehfalle 20.

Auf dem zweiten Lagerbolzen 52 ist schwenkbar das Spannelement 40 gelagert. Dazu weist das Spannelement 40 ein vorliegend kreisrundes Spannelementloch auf, welches von dem zweiten Lagerbolzen 52 durchdrungen ist. Mittels einer Feder ist das Spannelement 40 zu der Drehfalle 20 hin vorgespannt.

Im verriegelten Zustand, wenn das Hakenmaul 21 der Drehfalle 20 den Verriegelungsbolzen 12 aufnimmt und quer zur Aufnahmeöffnung 19 verläuft, übt das Spannelement 40 als Sicherungselement ein schließendes Moment auf die Drehfalle 20 aus. Dazu weist das Spannelement 40 eine exzentrisch zum zweiten Lagerbolzen 52 gekrümmte Spannfläche 41 auf, welche sich in nicht-selbsthemmendem Kontakt mit der Funktionsfläche 22 der Drehfalle 20 befindet. Die Spannfläche 41 ist vorliegend kreisbogenförmig gekrümmt und konvex ausgebildet.

Die Rastklinke 30 ist auf dem zweiten Lagerbolzen 52 axial neben dem Spannelement 40 angeordnet und ebenfalls schwenkbar auf dem zweiten Lagerbolzen 52 gelagert, also mit dem Spannelement 40 fluchtend. Dazu weist die Rastklinke 30 ein vorliegend kreisrundes Rastklinkenloch auf, welches von dem zweiten Lagerbolzen 52 durchdrungen ist. Mittels einer Feder ist die Rastklinke 30 zu der Drehfalle 20 hin vorgespannt.

Das Spannelement 40 ist vorliegend der ersten Seitenplatte 16 benachbart angeordnet und die Rastklinke 30 ist vorliegend der zweiten Seitenplatte benachbart angeordnet. Die Rastklinke 30 und das Spannelement 40 sind mit einem Leerweg auf Mitnahme gekoppelt, beispielsweise mittels einer Schlitz-Zapfen-Führung oder mittels eines axial abstehenden Mitnehmers.

Die Rastklinke 30 weist eine Rastfläche 31 auf, welche sich in Nachbarschaft zu der Spannfläche 41 des Spannelements 40 befindet. Im verriegelten Zustand ist die Rastfläche 31 beabstandet zu der Funktionsfläche 22 der Drehfalle 20 positioniert. Die Rastfläche 31 ist vorliegend kreisbogenförmig gekrümmt und konvex ausgebildet, kann aber auch eben sein.

Die Breite der Funktionsfläche 22, welche der Dicke des Grundkörpers der Drehfalle 20 entspricht, entspricht auch annähernd der Summe aus der Dicke der Rastklinke 30 und der Dicke des Spannelements 40. Die Drehfalle 20 weist also annähernd die gleiche Materialstärke auf wie die Materialstärken der Rastklinke 30 und des Spannelements 40 zusammen.

Wenn im Crashfall die Drehfalle 20 ein öffnendes Moment erfährt und das Spannelement 40 etwas wegdrückt, gelangt die Rastfläche 31 in Anlage an die Funktionsfläche 22 der Drehfalle 20. So dient die Rastklinke 30 der Abstützung der Drehfalle 20 und verhindert als weiteres Sicherungselement eine weitere Drehung der Drehfalle 20 in Öffnungsrichtung. Damit verhindert die Rastklinke 30 ein Öffnen der Drehfalle 20.

Im verriegelten Zustand der Verriegelungseinheit 10 befindet sich der Verriegelungsbolzen 12 in der in der ersten Seitenplatte 16 und in der zweiten Seitenplatte ausgebildeten Aufnahmeöffnung 19 und in dem Hakenmaul 21 der geschlossenen Drehfalle 20. Die Aufnahmeöffnung 19 und das Hakenmaul 21 verlaufen im verriegelten Zustand gekreuzt zueinander. Das Spannelement 40 sichert durch Zusammenwirken der Spannfläche 41 mit der Funktionsfläche 22 die Drehfalle 20. Die Rastfläche 31 der Rastklinke 30 ist geringfügig von der Funktionsfläche 22 der Drehfalle 20 beabstandet.

Zum Öffnen der Verriegelungseinheit 10 wird die Rastklinke 30 mittels eines Entriegelungshebels 35 von der Drehfalle 20 weg geschwenkt, wodurch sich die Rastfläche 31 der Rastklinke 30 weiter von der Funktionsfläche 22 der Drehfalle 20 entfernt. Die Rastklinke 30 nimmt das Spannelement 40 aufgrund der Mitnahmekopplung mit, so dass die Drehfalle 20 nicht länger gesichert ist. Die Rastklinke 30 nimmt dabei auch die Drehfalle 20 mit, wodurch diese öffnet, also in Öffnungsrichtung schwenkt.

Aufgrund der Schwenkbewegung der Drehfalle 20 zieht sich das Hakenmaul 21 von der in der ersten Seitenplatte 16 und in der zweiten Seitenplatte ausgebildeten Aufnahmeöffnung 19 zurück und gibt den Verriegelungsbolzen 12 frei, welcher sich entgegen der Einschwenkrichtung von der Verriegelungseinheit 10 entfernt. Hat der Verriegelungsbolzen 12 das Hakenmaul 21 verlassen, so befindet sich die Verriegelungseinheit 10 im entriegelten Zustand.

Gelangt in diesem entriegelten Zustand der Verriegelungsbolzen 12 wieder in die in der ersten Seitenplatte 16 und in der zweiten Seitenplatte gebildete Aufnahmeöffnung 19 und in Anlage an den Finger 26, so drückt der Verriegelungsbolzen 12 die Drehfalle 20 in ihre geschlossene Stellung. Das Spannelement 40 bewegt sich entlang der Funktionsfläche 22. Von dem Spannelement 40 mitgenommen oder aufgrund der Vorspannung einer Feder schwenkt die Rastklinke 30 auf die Drehfalle 20 zu, wobei sich die Rastfläche 31 der Funktionsfläche 22 der Drehfalle 20 nähert und dieser in einem geringen Abstand gegenüberliegt. Danach befindet sich die Verriegelungseinheit 10 wieder im verriegelten Zustand.

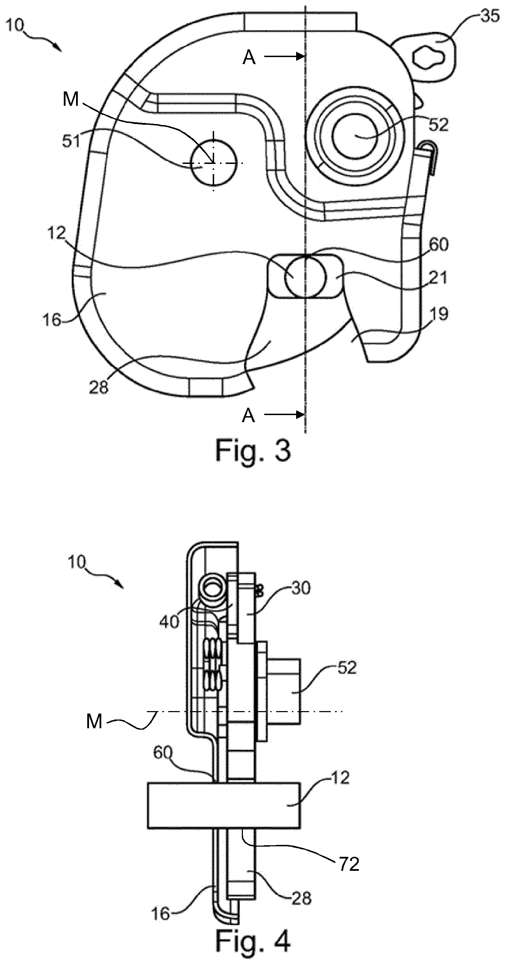

Bei einer aus dem Stand der Technik bekannten, in Fig. 3 und Fig. 4 dargestellten Verriegelungseinheit 10 ist die Aufnahmeöffnung 19 durch je einen an der ersten Seitenplatte 16 und an der zweiten Seitenplatte vorgesehenen Anschlagbereich 60 begrenzt.

Im verriegelten Zustand liegt der Verriegelungsbolzen 12, sofern er exakt parallel zu den Lagerbolzen 51, 52 in Axialrichtung verläuft, an den Anschlagbereichen 60 an der ersten Seitenplatte 16 sowie der zweiten Seitenplatte an. Der Anschlagbereichen 60 an der ersten Seitenplatte 16 und der Anschlagbereich an der zweiten Seitenplatte bilden zusammen einen ersten Kontaktbereich 71. Der erste Kontaktbereich 71 ist die Summe der Kontaktflächen zwischen dem Verriegelungsbolzen 12 und den Anschlagbereichen 60. An der den Anschlagbereichen 60 gegenüberliegenden Seite ist der Verriegelungsbolzen 12 in einem zweiten Kontaktbereich 72 in Kontakt mit der Nase 28 der Drehfalle 20. Der zweite Kontaktbereich 72 ist die Summe der Kontaktflächen zwischen dem Verriegelungsbolzen und der Drehfalle. Der Anschlagbereich 60 an der ersten Seitenplatte 16, der zweite Kontaktbereich 72 des Verriegelungsbolzens 12 mit der Nase 28 der Drehfalle 20 und der Anschlagbereich an der zweiten Seitenplatte liegen also in Axialrichtung versetzt zueinander. Somit sind der erste Kontaktbereich 71 und der zweite Kontaktbereich 72 derart angeordnet, dass diese sich in Axialrichtung nicht überlappen. Der erste Kontaktbereich 71 besteht aus zwei zueinander beabstandeten Kontaktflächen, die den zweiten Kontaktbereich 72 zwischen sich aufnehmen.

Verläuft der Verriegelungsbolzen 12 nicht exakt parallel zu den Lagerbolzen 51, 52 in Axialrichtung, sondern geneigt zur Axialrichtung, so liegt der Verriegelungsbolzen 12 entweder an dem Anschlagbereich 60 der ersten Seitenplatte 16 oder an dem Anschlagbereich der zweiten Seitenplatte an. Weiterhin liegt der Verriegelungsbolzen 12 an einer Kante der Nase 28 der Drehfalle 20 an.

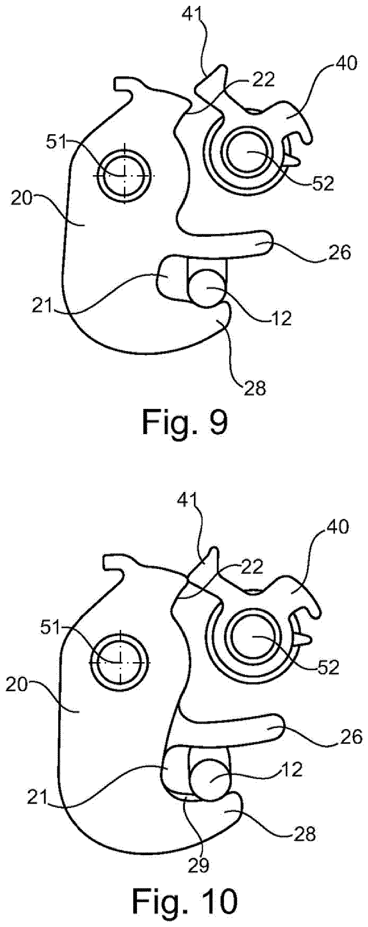

Ab einer bestimmten Neigung des Verriegelungsbolzens 12 zur Axialrichtung verhindert der Verriegelungsbolzen 12 beim Schließen der Verriegelungseinheit 10, dass die Drehfalle 20 vollständig einfällt. Ferner ist das Spannelement 40 durch die Drehfalle 20 blockiert und die Spannfläche 41 kann nicht in Kontakt mit der Funktionsfläche 22 gelangen. Somit kann das Spannelement 40 kein schließendes Moment auf die Drehfalle 20 zum Toleranzausgleich ausüben. Eine solche Stellung der Drehfalle 20 und des Spannelements 40 ist in Fig. 9 dargestellt.

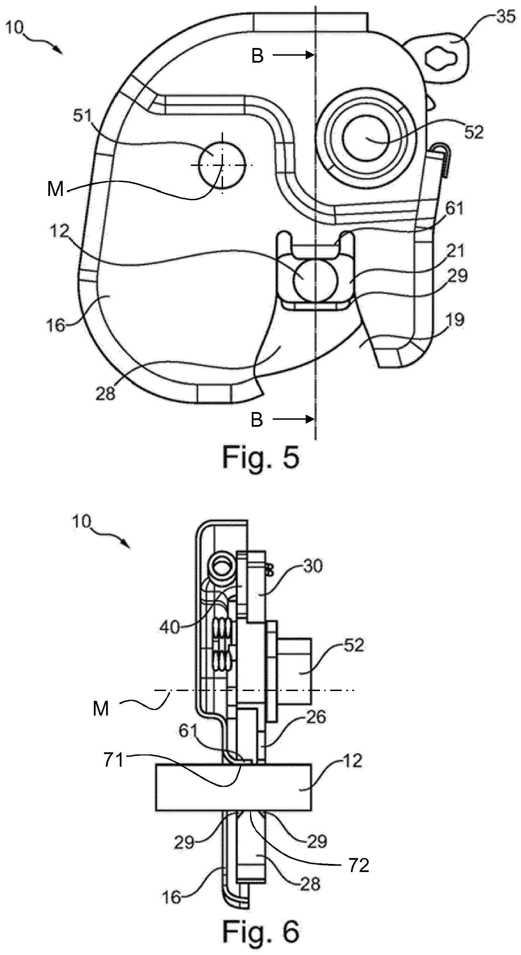

Gemäß einem ersten, in Fig. 5 und Fig. 6 dargestellten Ausführungsbeispiel, weist die erste Seitenplatte 16 ein Anschlagelement 61 auf, welches die Aufnahmeöffnung 19 begrenzt. Das Anschlagelement 61 ist vorliegend durch eine Umbiegung einer an der ersten Seitenplatte 16 vorgesehenen Lasche gebildet. Die Lasche ist dabei um etwa 90° umgebogen, das Anschlagelement 61 erstreckt sich somit rechtwinklig zu der übrigen ersten Seitenplatte 16 in Axialrichtung in das Schlossgehäuse der Verriegelungseinheit 10 hinein.

Das Anschlagelement 61 ist also vorliegend einstückig mit der ersten Seitenplatte 16 ausgeführt. Das Anschlagelement 61 erstreckt sich in Axialrichtung bis kurz vor den Finger 26 der Drehfalle 20, ohne diesen zu berühren.

Im verriegelten Zustand liegt der Verriegelungsbolzen 12, sofern er exakt parallel zu den Lagerbolzen 51, 52 in Axialrichtung verläuft, flach an dem Anschlagelement 61 an. An der dem Anschlagelement 61 gegenüberliegenden Seite ist der Verriegelungsbolzen 12 in Kontakt mit der Nase 28 der Drehfalle 20, und zwar mit dem Bereich, welcher zwischen den Fasen 29 liegt.

Der erste Kontaktbereich 71 des Verriegelungsbolzens 12 mit dem Anschlagelement 61 erstreckt sich somit in Axialrichtung annähernd über die ganze Länge des Anschlagelements 61. Der zweite Kontaktbereich 72 des Verriegelungsbolzens 12 mit der Drehfalle 20 erstreckt sich in Axialrichtung annähernd über den Bereich der Nase 28, welcher zwischen den Fasen 29 liegt. Der erste Kontaktbereich 71 des Verriegelungsbolzens 12 mit dem Anschlagelement 61 und der gegenüber liegende zweite Kontaktbereich 72 des Verriegelungsbolzens 12 mit der Drehfalle 20 überlappen sich in Axialrichtung teilweise.

Verläuft der Verriegelungsbolzen 12 nicht exakt parallel zu den Lagerbolzen 51, 52 in Axialrichtung, sondern geneigt zur Axialrichtung, so verschiebt sich der zweite Kontaktbereich 72 des Verriegelungsbolzens 12 mit der Drehfalle 20 in Axialrichtung zu einer Kante einer der beiden Fasen 29 auf der Nase 28. Der erste Kontaktbereich 71 des Verriegelungsbolzens 12 mit dem Anschlagelement 61 verschiebt sich ebenfalls. Je nach Orientierung der Neigung des Verriegelungsbolzens 12 liegt der erste Kontaktbereich 71 des Verriegelungsbolzens 12 mit dem Anschlagelement 61 am Ende des Anschlagelements 61, also zentral in dem Schlossgehäuse der Verriegelungseinheit 10, oder in der Nähe des Übergangs zwischen der Seitenplatte 16 und dem Anschlagelement 61.

Im ersten Fall, wenn der erste Kontaktbereich 71 des Verriegelungsbolzens 12 mit dem Anschlagelement 61 zentral in dem Schlossgehäuse der Verriegelungseinheit 10 liegt, liegt der zweite Kontaktbereich 72 des Verriegelungsbolzens 12 mit der Drehfalle 20 in Axialrichtung nur geringfügig von dem ersten Kontaktbereich 71 des Verriegelungsbolzens 12 mit dem Anschlagelement 61 entfernt. In diesem Fall hat die Neigung des Verriegelungsbolzens 12 nur eine verhältnismäßig geringe Auswirkung auf die Lage der Drehfalle 20 bei Verriegelung.

Im zweiten Fall, wenn der erste Kontaktbereich 71 des Verriegelungsbolzens 12 mit dem Anschlagelement 61 in der Nähe des Übergangs zwischen der Seitenplatte 16 und dem Anschlagelement 61 liegt, liegt der zweite Kontaktbereich 72 des Verriegelungsbolzens 12 mit der Drehfalle 20 in Axialrichtung weiter von dem ersten Kontaktbereich 71 des Verriegelungsbolzens 12 mit dem Anschlagelement 61 entfernt als im oben beschriebenen ersten Fall, aber nicht so weit wie bei einer Verriegelungseinheit 10 gemäß dem Stand der Technik.

Bis zu einer bestimmten Neigung des Verriegelungsbolzens 12 zur Axialrichtung gelangt die Spannfläche 41 des Spannelements 40 noch in Kontakt mit der Funktionsfläche 22 der Drehfalle 20 und das Spannelement 40 übt ein schließendes Moment auf die Drehfalle 20 zum Toleranzausgleich aus. Eine solche Stellung der Drehfalle 20 und des Spannelements 40, bei welcher die Spannfläche 41 gerade noch in Kontakt mit der Funktionsfläche 22 steht, ist in Fig. 10 dargestellt.

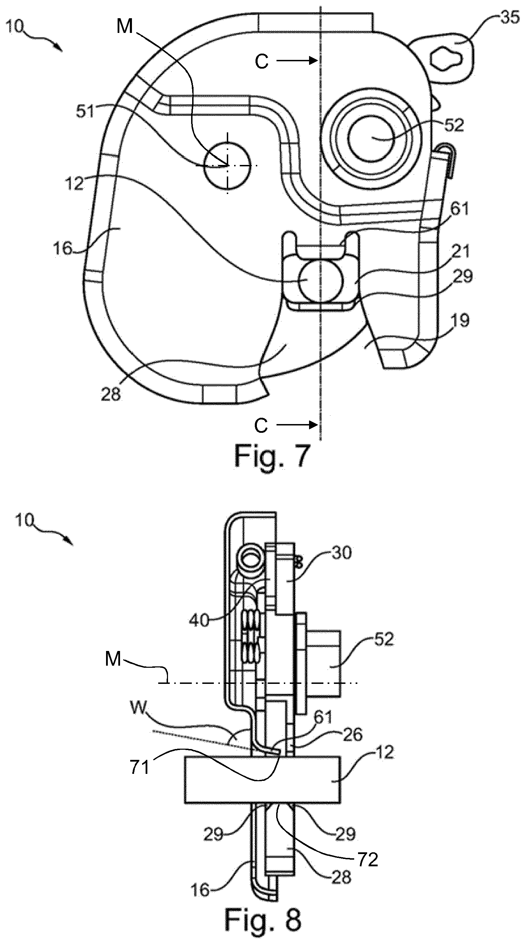

Gemäß einem zweiten, in Fig. 7 und Fig. 8 dargestellten Ausführungsbeispiel, weist die erste Seitenplatte 16 ebenfalls ein Anschlagelement 61 auf, welches die Aufnahmeöffnung 19 begrenzt. Das Anschlagelement 61 ist vorliegend durch eine Umbiegung einer an der ersten Seitenplatte 16 vorgesehenen Lasche gebildet. Die Lasche ist dabei, im Unterschied zu dem ersten Ausführungsbeispiel, um einen Biegewinkel W von etwa 80° umgebogen. Das Anschlagelement 61 erstreckt sich somit geneigt zu der übrigen ersten Seitenplatte 16 und geneigt zu der Axialrichtung in das Schlossgehäuse der Verriegelungseinheit 10 hinein.

Das Anschlagelement 61 ist vorliegend einstückig mit der ersten Seitenplatte 16 ausgeführt. Das Anschlagelement 61 erstreckt sich in Axialrichtung bis kurz vor den Finger 26 der Drehfalle 20, ohne diesen zu berühren.

Im verriegelten Zustand liegt der Verriegelungsbolzen 12, sofern er exakt parallel zu den Lagerbolzen 51, 52 in Axialrichtung verläuft, am Ende des Anschlagelements 61, also zentral in dem Schlossgehäuse der Verriegelungseinheit 10, an. Der erste Kontaktbereich 71 zwischen dem Anschlagelement 61 und dem Verriegelungsbolzen 12 ist annähernd punktförmig.

An der dem Anschlagelement 61 gegenüberliegenden Seite ist der Verriegelungsbolzen 12 in Kontakt mit der Nase 28 der Drehfalle 20, und zwar mit dem Bereich, welcher zwischen den Fasen 29 liegt.

Der zweite Kontaktbereich 72 des Verriegelungsbolzens 12 mit der Drehfalle 20 erstreckt sich in Axialrichtung annähernd über den Bereich der Nase 28, welcher zwischen den Fasen 29 liegt. Der erste Kontaktbereich 71 des Verriegelungsbolzens 12 mit dem Anschlagelement 61 liegt somit in Axialrichtung innerhalb des zweiten Kontaktbereichs 72 des Verriegelungsbolzens 12 mit der Drehfalle 20, vorzugsweise mittig. Der erste Kontaktbereich 71 des Verriegelungsbolzens 12 mit dem Anschlagelement 61 liegt dem zweiten Kontaktbereich 72 des Verriegelungsbolzens 12 mit der Drehfalle 20 diametral bezüglich des Verriegelungsbolzens 12 gegenüber.

Es ist auch denkbar, dass die beiden Fasen 29 in Axialrichtung ineinander übergehen. Dadurch ist der zweite Kontaktbereich 72 in Axialrichtung annähernd punktförmig. Die Nase 28 der Drehfalle 20 weist also an ihrer dem Verriegelungsbolzen 12 zugewandten Seite eine Kante auf. Ebenso ist es denkbar, dass die dem Verriegelungsbolzen 12 zugewandte Fläche der Nase 28 konvex gekrümmt ausgebildet ist. Auch dadurch ist der zweite Kontaktbereich 72 annähernd punktförmig. Der punktförmige erste Kontaktbereich 71 liegt dann dem punktförmigen zweiten Kontaktbereich 72 diametral bezüglich des Verriegelungsbolzens 12 gegenüber.

Verläuft der Verriegelungsbolzen 12 nicht exakt parallel zu den Lagerbolzen 51, 52 in Axialrichtung, sondern geneigt zur Axialrichtung, so verschiebt sich der zweite Kontaktbereich 72 des Verriegelungsbolzens 12 mit der Drehfalle 20 in Axialrichtung zu einer Kante einer der beiden Fasen 29 auf der Nase 28. Der erste Kontaktbereich 71 des Verriegelungsbolzens 12 mit dem Anschlagelement 61 verschiebt sich jedoch nicht, sondern bleibt am Ende des Anschlagelements 61, also zentral in dem Schlossgehäuse der Verriegelungseinheit 10.

Der zweite Kontaktbereich 72 des Verriegelungsbolzens 12 mit der Drehfalle 20 liegt somit in Axialrichtung nur geringfügig von dem ersten Kontaktbereich 71 des Verriegelungsbolzens 12 mit dem Anschlagelement 61 entfernt. Somit hat die Neigung des Verriegelungsbolzens 12 nur eine verhältnismäßig geringe Auswirkung auf die Lage der Drehfalle 20 bei Verriegelung.

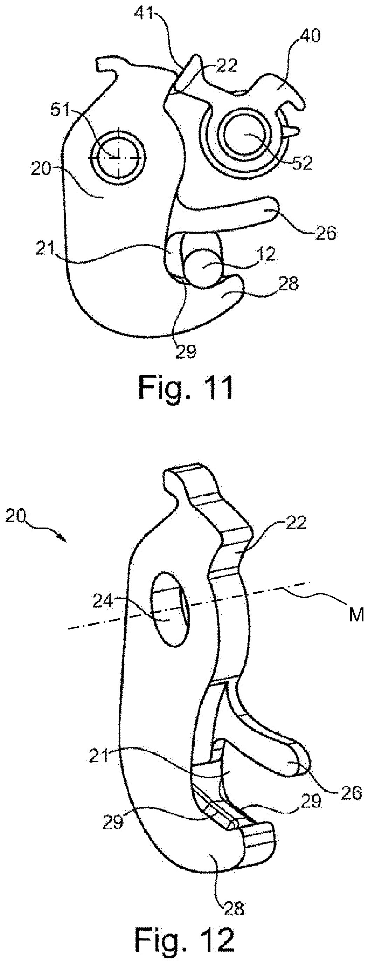

Die Spannfläche 41 des Spannelements 40 gelangt bei Verriegelung in Kontakt mit der Funktionsfläche 22 der Drehfalle 20 und das Spannelement 40 übt ein schließendes Moment auf die Drehfalle 20 zum Toleranzausgleich aus. Eine solche Stellung der Drehfalle 20 und des Spannelements 40 ist in Fig. 11 dargestellt.

Bei dem ersten, in Fig. 5 und Fig. 6 dargestellten Ausführungsbeispiel, sowie bei dem zweiten, in Fig. 7 und Fig. 8 dargestellten Ausführungsbeispiel, ist das Anschlagelement 61 jeweils in Axialrichtung zu dem Finger 26 der Drehfalle 20 versetzt angeordnet. Dadurch schwenkt der Finger 26 beim Verriegeln sowie beim Entriegeln der Verriegelungseinheit 10 an dem Anschlagelement 61 vorbei, vorzugsweise ohne dieses zu berühren.

### Bezugszeichenliste

- 1: Fahrzeugsitz
- 3: Rückenlehne
- 5: Sitzteil
- 10: Verriegelungseinheit
- 12: Verriegelungsbolzen
- 16: erste Seitenplatte
- 19: Aufnahmeöffnung
- 20: Drehfalle
- 21: Hakenmaul
- 22: Funktionsfläche
- 24: Drehfallenloch
- 26: Finger
- 28: Nase
- 29: Fase
- 30: Rastklinke
- 31: Rastfläche
- 35: Entriegelungshebel
- 40: Spannelement
- 41: Spannfläche
- 51: erster Lagerbolzen
- 52: zweiter Lagerbolzen
- 60: Anschlagbereich
- 61: Anschlagelement
- 71: erster Kontaktbereich
- 72: zweiter Kontaktbereich
- M: Mittelachse (von 51)
- W: Biegewinkel

## Patentansprüche

1. Verriegelungseinheit (10) für einen Fahrzeugsitz (1), umfassend ein Schlossgehäuse mit einer Aufnahmeöffnung (19) zur Aufnahme eines Verriegelungsbolzens (12), sowie eine schwenkbar um einen ersten Lagerbolzen (51) gelagerte Drehfalle (20), welche ein Hakenmaul (21) zum Verriegeln mit dem Verriegelungsbolzen (12) aufweist, wobei der erste Lagerbolzen (51) in einer Axialrichtung ausgerichtet ist, und die Aufnahmeöffnung (19) durch ein Anschlagelement (61) begrenzt ist, das Anschlagelement (61) einen Anschlag für den in dem Hakenmaul (21) befindlichen Verriegelungsbolzen (12) darstellt, und das Anschlagelement (61) in Axialrichtung in das Schlossgehäuse hinein ragt, wobei in einem verriegelten Zustand der Verriegelungseinheit (10) bei exakt in Axialrichtung verlaufendem Verriegelungsbolzen (12) ein erster Kontaktbereich (71) zwischen dem Verriegelungsbolzen (12) und dem Anschlagelement (61) und ein zweiter Kontaktbereich (72) zwischen dem Verriegelungsbolzen (12) und der Drehfalle (20) sich in Axialrichtung teilweise überlappen, oder der erste Kontaktbereich (71) in Axialrichtung vollständig innerhalb des zweiten Kontaktbereichs (72) liegt.

2. Verriegelungseinheit (10) nach Anspruch 1, **dadurch gekennzeichnet, dass** der erste Kontaktbereich (71) genau eine zusammenhängende, linienförmige Kontaktfläche ist.

3. Verriegelungseinheit (10) nach Anspruch 1, **dadurch gekennzeichnet, dass** der erste Kontaktbereich (71) aus mehreren Kontaktflächen besteht.

4. Verriegelungseinheit (10) nach einem der vorstehenden Ansprüche, **dadurch gekennzeichnet, dass** das Schlossgehäuse mindestens eine erste Seitenplatte (16) umfasst, in welcher die Aufnahmeöffnung (19) ausgebildet ist.

5. Verriegelungseinheit (10) nach Anspruch 4, **dadurch gekennzeichnet, dass** das Anschlagelement (61) von der ersten Seitenplatte (16) in Axialrichtung in das Schlossgehäuse hineinragt.

6. Verriegelungseinheit (10) nach einem der Ansprüche 4 oder 5, **dadurch gekennzeichnet, dass** das Anschlagelement (61) durch eine Umbiegung einer an der ersten Seitenplatte (16) vorgesehenen Lasche gebildet ist.

7. Verriegelungseinheit (10) nach Anspruch 6, **dadurch gekennzeichnet, dass** die Lasche um einen Biegewinkel (W) zwischen 75° und 85° umgebogen ist.

8. Verriegelungseinheit (10) nach Anspruch 6, **dadurch gekennzeichnet, dass** die Lasche um einen Biegewinkel (W) von etwa 90° umgebogen ist.

9. Verriegelungseinheit (10) nach einem der vorstehenden Ansprüche, **dadurch gekennzeichnet, dass** das Hakenmaul (21) von einer Nase (28) und einem Finger (26) begrenzt ist.

10. Verriegelungseinheit (10) nach Anspruch 9, **dadurch gekennzeichnet, dass** die Drehfalle (20) einen Grundkörper mit annähernd konstanter Dicke aufweist, wobei die Dicke des Fingers (26) geringer als die Dicke des Grundkörpers ist.

11. Verriegelungseinheit (10) nach Anspruch 10, **dadurch gekennzeichnet, dass** der Finger (26) in Axialrichtung außermittig zu dem Grundkörper der Drehfalle (20) angeordnet ist.

12. Verriegelungseinheit (10) nach einem der Ansprüche 9 bis 11, **dadurch gekennzeichnet, dass** das Anschlagelement (61) in Axialrichtung derart versetzt zu dem Finger (26) angeordnet ist, dass der Finger (26) an dem Anschlagelement (61) vorbeischwenken kann.

13. Verriegelungseinheit (10) nach einem der Ansprüche 10 bis 12, **dadurch gekennzeichnet, dass** das Anschlagelement (61) in Axialrichtung den Grundkörper der Drehfalle (20) überlappt.

14. Verriegelungseinheit (10) nach einem der Ansprüche 9 bis 13, **dadurch gekennzeichnet, dass** die Nase (28) an mindestens einer dem Hakenmaul (21) zugewandten Kante eine Fase (29) aufweist.

15. Fahrzeugsitz (1), umfassend mindestens eine Verriegelungseinheit (10) nach einem der vorstehenden Ansprüche.

## Claims

1. Locking unit (10) for a vehicle seat (1), comprising a lock housing, which has a receiving opening (19) for receiving a locking bolt (12), and a rotary latch (20), which is mounted so as to be pivotable around a first bearing bolt (51) and which has a hook jaw (21) for locking with the locking bolt (12), wherein the first bearing bolt (51) is oriented in an axial direction, and the receiving opening (19) is delimited by a stop element (61), the stop element (61) constitutes a stop for the locking bolt (12) situated in the hook jaw (21), and the stop element (61) projects into the lock housing in the axial direction, wherein, in a locked state of the locking unit (10), with the locking bolt (12) extending exactly in the axial direction, a first contact region (71) between the locking bolt (12) and the stop element (61) and a second contact region (72) between the locking bolt (12) and the rotary latch (20) partially overlap in the axial direction, or the first contact region (71) is situated completely inside the second contact region (72) in the axial direction.

2. Locking unit (10) according to Claim 1, **characterized in that** the first contact region (71) is precisely one continuous, linear contact surface.

3. Locking unit (10) according to Claim 1, **characterized in that** the first contact region (71) consists of multiple contact surfaces.

4. Locking unit (10) according to one of the preceding claims, **characterized in that** the lock housing comprises at least one first side plate (16) in which the receiving opening (19) is formed.

5. Locking unit (10) according to Claim 4, **characterized in that** the stop element (61) projects from the first side plate (16) into the lock housing in the axial direction.

6. Locking unit (10) according to either of Claims 4 and 5, **characterized in that** the stop element (61) is formed by bending of a tab provided on the first side plate (16).

7. Locking unit (10) according to Claim 6, **characterized in that** the tab is bent through a bending angle (W) of between 75° and 85°.

8. Locking unit (10) according to Claim 6, **characterized in that** the tab is bent through a bending angle (W) of approximately 90°.

9. Locking unit (10) according to one of the preceding claims, **characterized in that** the hook jaw (21) is delimited by a nose (28) and a finger (26).

10. Locking unit (10) according to Claim 9, **characterized in that** the rotary latch (20) has a main body with approximately constant thickness, wherein the thickness of the finger (26) is less than the thickness of the main body.

11. Locking unit (10) according to Claim 10, **characterized in that**, in the axial direction, the finger (26) is arranged off-centre in relation to the main body of the rotary latch (20).

12. Locking unit (10) according to one of Claims 9 to 11, **characterized in that**, in the axial direction, the stop element (61) is arranged offset in relation to the finger (26) in such a way that the finger (26) can pivot past the stop element (61).

13. Locking unit (10) according to one of Claims 10 to 12, **characterized in that**, in the axial direction, the stop element (61) overlaps the main body of the rotary latch (20).

14. Locking unit (10) according to one of Claims 9 to 13, **characterized in that** the nose (28) has on at least one edge facing the hook jaw (21) a bevel (29) .

15. Vehicle seat (1) comprising at least one locking unit (10) according to one of the preceding claims.

## Revendications

1. Unité de verrouillage (10) pour un siège de véhicule (1), comprenant un boîtier de serrure avec une ouverture de réception (19) pour recevoir un boulon de verrouillage (12), ainsi qu'un pêne (20) supporté de manière à pouvoir pivoter autour d'un premier boulon de palier (51), qui présente une mâchoire d'accrochage (21) prévue pour se verrouiller avec le boulon de verrouillage (12), le premier boulon de palier (51) étant orienté dans une direction axiale et l'ouverture de réception (19) étant limitée par un élément de butée (61), l'élément de butée (61) constituant une butée pour le boulon de verrouillage (12) se trouvant dans la mâchoire d'accrochage (21), et l'élément de butée (61) pénétrant dans la direction axiale dans le boîtier de serrure,
dans un état verrouillé de l'unité de verrouillage (10), lorsque le boulon de verrouillage (12) s'étend exactement dans la direction axiale, une première région de contact (71) entre le boulon de verrouillage (12) et l'élément de butée (61) et une deuxième région de contact (72) entre le boulon de verrouillage (12) et le pêne (20) se chevauchant partiellement dans la direction axiale, ou la première région de contact (71) se trouvant dans la direction axiale complètement à l'intérieur de la deuxième région de contact (72).

2. Unité de verrouillage (10) selon la revendication 1, **caractérisée en ce que** la première région de contact (71) est exactement une surface de contact linéaire continue.

3. Unité de verrouillage (10) selon la revendication 1, **caractérisée en ce que** la première région de contact (71) se compose de plusieurs surfaces de contact.

4. Unité de verrouillage (10) selon l'une quelconque des revendications précédentes, **caractérisée en ce que** le boîtier de serrure comprend au moins une première plaque latérale (16) dans laquelle est réalisée l'ouverture de réception (19).

5. Unité de verrouillage (10) selon la revendication 4, **caractérisée en ce que** l'élément de butée (61) pénètre depuis la première plaque latérale (16) dans la direction axiale dans le boîtier de serrure.

6. Unité de verrouillage (10) selon l'une quelconque des revendications 4 et 5, **caractérisée en ce que** l'élément de butée (61) est formé par courbure d'une patte prévue au niveau de la première plaque latérale (16).

7. Unité de verrouillage (10) selon la revendication 6, **caractérisée en ce que** la patte est courbée suivant un angle de courbure (W) compris entre 75° et 85°.

8. Unité de verrouillage (10) selon la revendication 6, **caractérisée en ce que** la patte est courbée suivant un angle de courbure (W) d'environ 90°.

9. Unité de verrouillage (10) selon l'une quelconque des revendications précédentes, **caractérisée en ce que** la mâchoire d'accrochage (21) est limitée par un ergot (28) et un doigt (26).

10. Unité de verrouillage (10) selon la revendication 9, **caractérisée en ce que** le pêne (20) présente un corps de base d'épaisseur approximativement constante, l'épaisseur du doigt (26) étant inférieure à l'épaisseur du corps de base.

11. Unité de verrouillage (10) selon la revendication 10, **caractérisée en ce que** le doigt (26) est disposé dans la direction axiale de manière excentrée par rapport au corps de base du pêne (20) .

12. Unité de verrouillage (10) selon l'une quelconque des revendications 9 à 11, **caractérisée en ce que** l'élément de butée (61) est disposé dans la direction axiale de manière décalée par rapport au doigt (26) de telle sorte que le doigt (26) puisse pivoter devant l'élément de butée (61).

13. Unité de verrouillage (10) selon l'une quelconque des revendications 10 à 12, **caractérisée en ce que** l'élément de butée (61), dans la direction axiale, chevauche le corps de base du pêne (20).

14. Unité de verrouillage (10) selon l'une quelconque des revendications 9 à 13, **caractérisée en ce que** l'ergot (28) présente un biseau (29) au niveau d'au moins une arête tournée vers la mâchoire d'accrochage (21).

15. Siège de véhicule (1), comprenant au moins une unité de verrouillage (10) selon l'une quelconque des revendications précédentes.
